Europäisches Patentamt

European Patent Office

Office européen des brevets

(11) Publication number: **0 625 820 A2**

# EUROPEAN PATENT APPLICATION

(21) Application number: **94201391.3**

(22) Date of filing: **18.05.94**

(51) Int. Cl.⁵: **H02M 3/337**

(30) Priority: **18.05.93 NL 9300860**

(43) Date of publication of application:
**23.11.94 Bulletin 94/47**

(84) Designated Contracting States:
**DE FR GB NL**

(71) Applicant: **N.V. Nederlandsche Apparatenfabriek NEDAP Oude Winterswijkseweg 7 NL-7141 DE Groenlo (NL)**

(72) Inventor: **van Eerden, Gerrit Hendrik Polstraat 54 NL-7121 DL Aalten (NL)**

(74) Representative: **Smulders, Theodorus A.H.J., Ir. et al Vereenigde Octrooibureaux Nieuwe Parklaan 97 NL-2587 BN 's-Gravenhage (NL)**

(54) **DC converter.**

(57) The DC converter comprises a transformer with primary and secondary windings and two pairs of controllable semiconductor switching elements connected in a bridge configuration. Each pair comprises two series-connected controllable semiconductor switching elements. The pairs are connected in parallel to an input DC voltage source. The primary winding is connected between the nodal points of the series-connected controllable semiconductor switching elements, and the secondary winding, which is coupled inductively with the primary winding, in operation delivers a controllable voltage to a load. The DC converter further comprises a control circuit driving the controllable semiconductor switching elements in such a manner that the two controllable semiconductor switching elements of the first pair are turned on in alternation and in non-overlapping manner and that the second pair of controllable semiconductor switching elements are turned on and off in corresponding manner but at points of time which are time-delayed relative to the switching instants of the first pair by a controllable delay time which is between zero and half the periodic duration of the control frequency and with which the voltage across the load can be regulated. The control circuit generates a feedback signal proportional to the difference between a desired and an actual value of the controllable voltage. According to the invention, the control circuit determines the delay time on the basis of the time-integrated difference between the feedback signal and a signal proportional to the current in the primary winding.

FIG.1

This invention relates to A DC converter comprising a transformer having primary and secondary windings; two pairs of controllable semiconductor switching elements connected in a bridge configuration, each pair comprising two series-connected controllable semiconductor switching elements, said pairs being connected in parallel to an input DC voltage source, the primary winding being connected between the nodal points of the series-connected controllable semiconductor switching elements, and the secondary winding, being coupled inductively with the primary winding, in operation delivering a controllable voltage to a load; a control circuit driving the controllable semiconductor switching elements in such a manner that the two controllable semiconductor switching elements of the first pair are turned on in alternation and in non-overlapping manner and that the second pair of controllable semiconductor switching elements are turned on and off in corresponding manner but at points of time which are time-delayed relative to the switching instants of the first pair by a controllable delay time which is between zero and half the periodic duration of the control frequency and with which the voltage across the load can be regulated, the control circuit generating a feedback signal which is proportional to the difference between a desired and an actual value of the controllable voltage.

A full-bridge circuit, also referred to as H-bridge, with phase-shifted drive of the bridge legs is described, for example, in "High voltage, high frequency switching using a cascode connection of bipolar transistor and power MOSFET", S. Clemente, B. Pelly, R. Ruttinsha, B. Taylor, IEEE Proceedings of the Industry Applications Society Conference, 1982, pp. 1395-1405.

A complete DC converter is described, for example, in "Pseudoresonant full bridge dc/dc converter", O.D. Patterson, D.M. Divan, Power Electronics Specialists Conference Records, June 1987, pp. 424-430 and in U.S. Patent No. 4864479, R.L. Steigerwald et al, Sep 5, 1989.

The trend in switching power supplies is to reduce the size. This can be achieved by increasing the switching frequency. Also of importance is a highest possible efficiency in order to enable keeping the volume and/or the surface needed for cooling as small as possible. When the switching frequency of standard pulse-width modulated converters is increased, the switching losses soon predominate because the switching times cannot be easily reduced.

Per switching cycle a certain amount of energy is dissipated; the switching losses accordingly increase proportionally to the switching frequency. These switching losses arise because at the instant when the controllable semiconductor switch (transistor or MOSFET) is turned on, there is still a voltage across the controllable semiconductor switch while current is already beginning to flow through the switch. This current is the sum of the load current and the discharge current of the parasitic capacitances in the circuit elements. In the turn-off interval, too, a voltage across and a current through the semiconductor switch arise simultaneously. In the case of a MOSFET, these switching losses are due to the fact that although the voltage between the external gate and source connections can be made zero, a voltage continues to exist on the internal gate during turn-off because of the series resistance of the gate connection consisting of polysilicon. This voltage drop is caused by the discharge current of the gate source capacitance and by the current through this resistor as a result of the change in the voltage across the drain gate capacitance during turn-off. The result is that the efficiency decreases according as the switching frequency is selected to be higher.

By means of resonant concepts the voltage across the switch can be made zero before it switches on or the current through the switch can be made zero before it switches off. This is effected by means of the energy stored in the circuit elements and through turning the switch(es) on and off at the proper times. Thus the switching losses can be minimized, however, compared with the standard pulse-width modulated converters, at the cost of large currents in the circuit elements, less good controllability and a complex drive of the switch(es). The phase-modulated full-bridge zero-voltage converter as described in the publications referred to, has the advantages of the standard pulse-width modulated converter and resonant converters.

By zero-voltage switching is meant that at the time of switching the voltage across the controllable semiconductor switch is zero or substantially zero.

One of the disadvantages of the known control circuits is the complex control of the switches.

The object of the present invention is to provide a simple, reliable and flexible control circuit for the phase-modulated zero-voltage switching full-bridge converter.

In a converter according to the invention, zero-voltage switching is realized in that the energy stored in the leakage self-induction and magnetizing self-induction of the isolation transformer and in the secondary coil discharges the parasitic capacitances of the circuit elements after one of the switches in the bridge has been turned off. The voltage across the other switch in the same leg thereby becomes zero, whereafter it can be turned on without loss. The output voltage can be regulated by phase-shifting relative to each other the two symmetrical square waves with which the two bridge legs are driven. The primary winding of the isolation transformer is connected between the two bridge legs and across it exists the difference between the two bridge leg voltages. After rectification on the secondary side there arises a pulse-width modulated signal whose duty cycle is proportional to the phase difference between the two control signals. After smoothing by an LC filter a DC voltage can be obtained which is proportional to the phase difference referred to.

In known control circuits, such as in the control IC of the type ML 4818 of the firm Micro Linear, San Jose, California, U.S.A., and in the control IC of the type UC 3875 of the firm Unitrode, Merrimack, New Hampshire, U.S.A., a controllable phase difference is realized by comparing a saw-tooth voltage with a control signal, which in turn is obtained from the (integrated) difference between desired and actual output voltage. This method is called voltage mode control.

Another control method using these ICs is current mode control, where the control signal is compared with the coil current or a current related thereto. With the control signal now the peak value of the coil current is controlled. The advantage of this method is that the loop amplification has a first-order character, instead of the second-order character of the voltage mode control. As a result, a higher control speed of the converter with feedback is possible. The disadvantage is the inherent instability that arises when the duty cycle exceeds 50%. This instability can be prevented with 'slope compensation', the undesired side-effect being that the loop amplification is no longer a pure first-order quantity. Another advantage of current mode control is that if the primary transformer current is measured, undesired direct currents in the bridge - as a result of unbalance in forward voltages and switching times of the power switches and as a result of unbalance in switching and delay times in the control circuit - are suppressed by the control.

Both methods have as a disadvantage that they are rather sensitive to interference signals. These may be switching transients arising in the converter itself, as well as external interference signals.

Another disadvantage of the first-mentioned control method is manifest in the case of small phase differences, for instance in the case of overload or short-circuiting of the output, or in a converter with a controllable output voltage.

Because the control signal in this area of the control range is substantially equal to the minimum value of the saw-tooth voltage, it is difficult to keep the control in this area stable and the transfer monotonously ascending. The control may start to jitter and periods may be skipped. The fact is that before the control signal falls below the minimum value of the saw-tooth signal, the phase difference has to be set at zero (or a very minor value) by means of an auxiliary circuit so as to prevent the control circuit from losing control over the converter, whereby the converter might become faulty.

The intervention of this auxiliary circuit gives rise to a jump in the transfer function from control signal to phase difference if the control signal is increased from zero. The minimum phase difference that can be achieved before the auxiliary circuit intervenes is determined by the reaction times of the comparators (100-300 ns for standard comparators).

One object of the invention is to provide a DC converter with a highest possible efficiency and with the advantages of the second method mentioned, viz. a high control speed and an automatic balancing, but without the disadvantages of the two methods discussed.

This object can be realized by converting the coil current or a current related thereto to a voltage, subtracting the control signal from this and integrating the difference. At the instant when the output voltage of the integrator exceeds a reference voltage, the bridge is switched from the active phase to the free-flow phase. Just before the start of the next active phase the integrator is reset. Now the switching moment is not determined by the moment at which a saw-tooth voltage (voltage mode control) or the measured current (current mode control) has become equal to the variable control signal, but by the moment at which a saw-tooth voltage, with a slope determined by the difference between the measured current and the control signal, has attained a given constant value. Through the integrating operation the control circuit is substantially insensitive to interference signals.

The advantages of the second method mentioned (current mode control) are retained because the coil current is controlled per active period. The above-mentioned disadvantage of instability does not occur because the switching moment is not only current-dependent but also time-dependent, but also the loop transfer is not a purely first-order quantity anymore. An additional advantage is that it becomes possible to use trailing edge pulse width-modulated after-controllers, whereby the instant of turn-off is controlled rather than the instant of turn-on, as is conventional with switching or magnetic after-controllers. The advantage of this is that a standard current mode control IC can be used for the drive of this switch, the advantages being a fast control and an automatic current limitation.

If the converter is controlled with standard current mode control, then this way of after-control cannot be employed because the control becomes unstable if the current is greater in the interval in which the secondary switch is closed than in the remaining portion of the period.

For comparing the integrator voltage with a reference voltage and for detecting a too high peak current, use is made of standard logic gates with schmitt trigger inputs, the reference voltage being formed by the threshold voltage of the gates. Compared with standard comparators, these gates are very fast and inexpensive. A disadvantage may be the inaccuracy of the threshold voltage. If a high accuracy is required, then adjustment is necessary.

The pulses coming from the control circuit or from the peak current limitation are converted to control signals for the controllable semiconductor switches by means of two flip-flops, for instance D flip-flops. The D flip-flop for one bridge leg is connected as a bi-divider and is driven with clock signals by an oscillator. The D flip-flop driving the other bridge leg takes over the state of the first D flip-flop as soon as the command to that effect is received from the control circuit or from the peak current limitation. By connecting the D flip-flops in this way and providing them with clock signals, a very simple, inexpensive and reliable drive of the controllable semiconductor switches can be realized. The fact that the parasitic capacitances parallel to the controllable semiconductor switches are passively discharged before the relevant controllable semiconductor switch is turned on, offers the possibility of arranging capacitors parallel to the controllable semiconductor switches, so that the efficiency can be increased.

During turn-off these capacitors limit the voltage increase per unit time, i.e. the slope of the flanks, so that the current through the parasitic drain gate capacitance and the parasitic gate series resistance decreases and therefore also the voltage drop across this series resistance decreases.

Accordingly, in the turn-off interval a lower voltage exists between the internal gate and source, which results in smaller drain currents and therefore smaller turn-off losses. An additional advantage is that the interference level of the converter decreases because of the reduced flank slopes. However, it has to be taken into consideration that these capacitors may limit the input voltage range and/or the load range in which zero-voltage switching occurs.

Hereinafter the invention will be further elucidated on the basis of an exemplary embodiment, with reference to the accompanying drawings, wherein in succession:

Fig. 1 shows a block diagram of the control circuit and the converter in which the control circuit is used;

Fig. 2 shows voltage and current forms of the most important elements of the control circuit and the converter, for, respectively:

a. minimum load of the output

b. maximum load of the output

c. overload of the output;

Fig. 3 shows

a. An exemplary embodiment of the control circuit

b. and c. Alternatives to the circuits connecting the driver transformers with the control inputs of the controllable semiconductor switches.

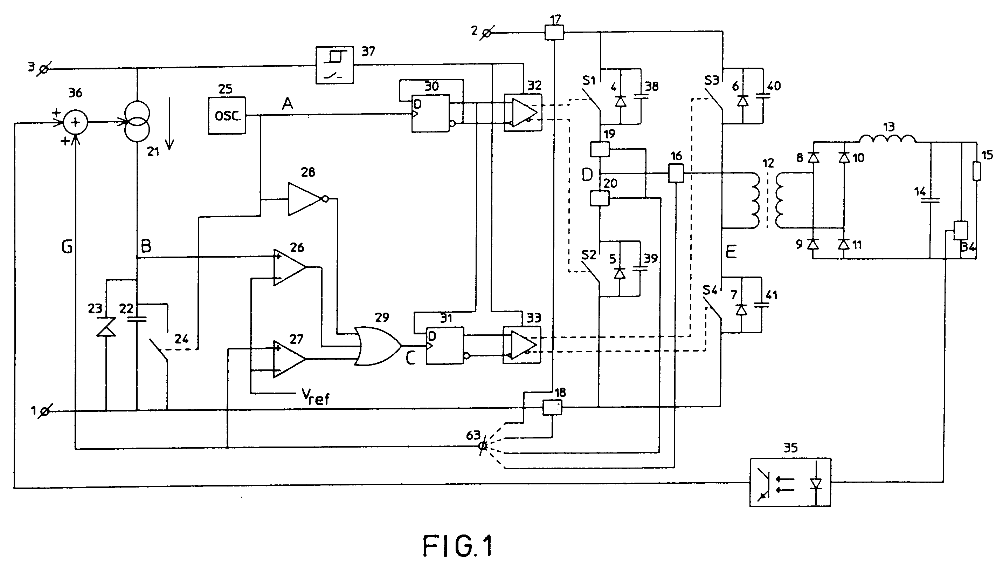

Fig. 1 diagrammatically shows an example of a DC/DC converter according to the invention. In Fig. 1 the input DC voltage can be connected to the terminals 1 and 2 and an auxiliary voltage for feeding the control circuit can be connected to the terminals 1 and 3. Terminal 63 is connected with one of the current measuring circuits 16, 17, 18 or 19 and 20. The alternating current on the secondary winding of transformer 12 is rectified by diodes 8, 9, 10 and 11 and smoothed by an LC filter consisting of a choking coil 13 and a smoothing capacitor 14. Across load 15 a DC voltage with a superposed relatively small AC voltage component is then available. The power delivered by the converter is dissipated by load 15.

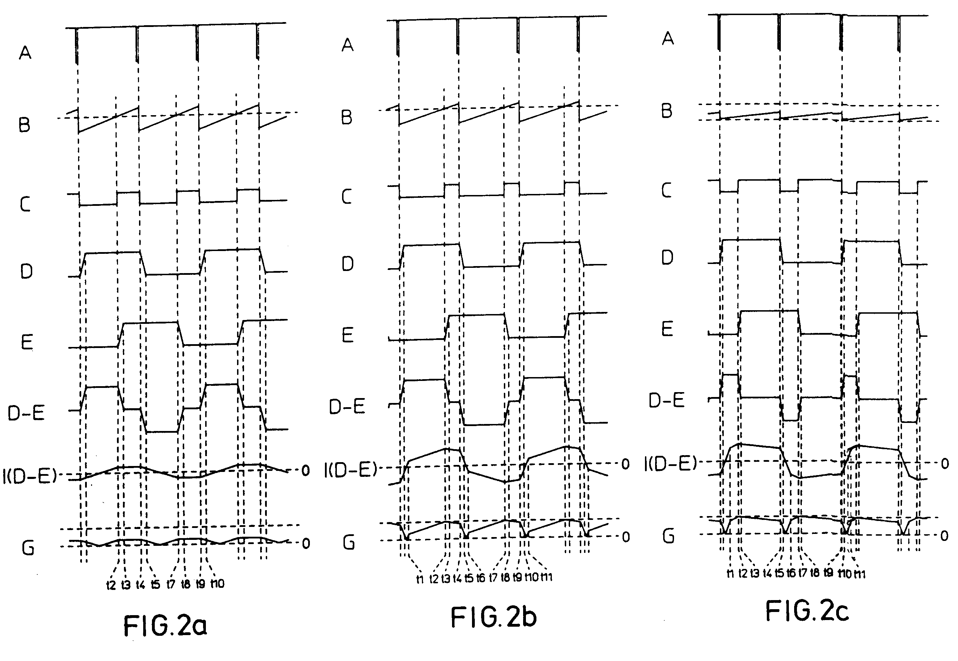

In the condition of the bridge, which consists of four controllable semiconductor switches S1, S2, S3 and S4, four different phases can be distinguished, as shown in Figure 2:

F1, the active phase, from t1 to t2 and from t6 to t7, wherein power is transferred, two crosswise arranged controllable semiconductor switches being closed in each case, i.e. S1 and S4 or S2 and S3;

F2, the free-flow phase, from t2 to t4 and from t7 to t9, wherein the upper two controllable semiconductor switches S1 and S3, or the two lower ones, S2 and S4, are closed. In this phase the primary winding of the transformer is therefore shortcircuited by the bridge;

F3, the swing-over phase, from t2 to t3 and from t7 to t8 for the leg consisting of S3 and S4, and from t4 to t5 and from t9 to t10 for the leg consisting of S1 and S2. In this phase the voltage swings passively at point D or E from zero to the terminal voltage 2 or the other way round. One controllable semiconductor switch is always closed;

F4, the commutation phase, where the current that flowed through the diodes 8 and 11 is taken over by the diodes 9 and 10 or the other way round. In this phase two crosswise arranged controllable semiconductor switches are closed; these are the same as in the subsequent active phase. Depending on the dimensioning and the load, a part of the commutation already takes place in the swing-over phase of the leg consisting of S3 and S4, while during this swing-over phase, the free-flow phase is already starting.

Accordingly, the sequence during one complete period, from t1 to t11, is F1, F3, F2, F3, F4, F1, F3, F2, F3, F4. Since in the situation of Fig. 2a substantially no power is being transferred, the commutation phase is very short and t6 substantially coincides with t4, and t11 with t9.

The controllable semiconductor switches are operated by the control circuits 32 and 33, with at least the control signals for S1 and S3 having galvanic isolation between input and output. The control circuits pass on the turn-off command directly, whilst the turn-on command is delayed to the instant where the voltage across the relevant controllable semiconductor switching element has become substantially zero. As a result, the turn-on losses become negligibly small. Turn-off losses can be minimized by making the turn-off interval as short as possible.

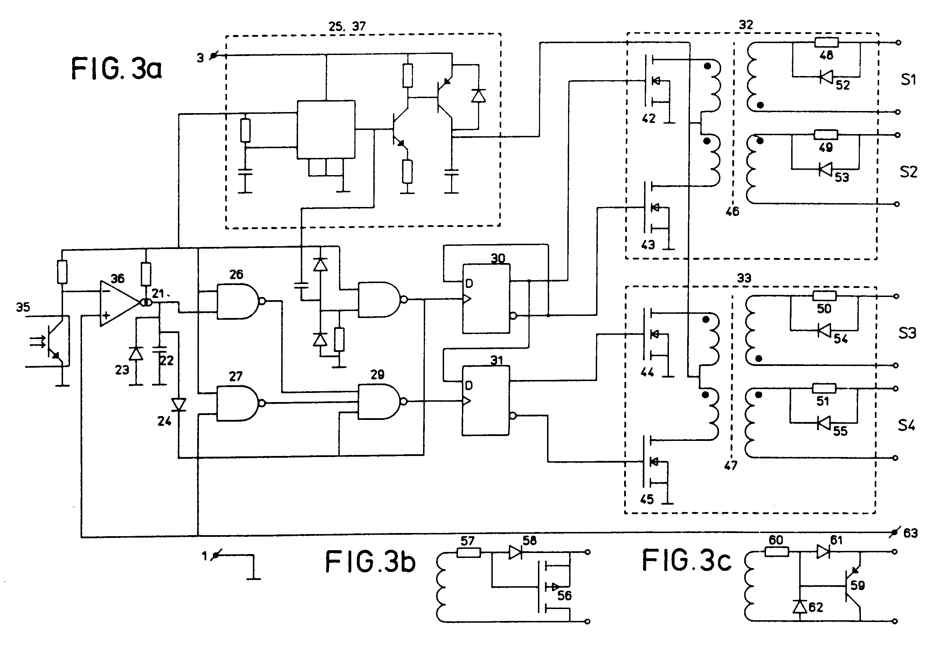

The control circuits receive their commands from two D flip-flops 30 and 31. Because the two switches of a bridge leg are controlled by, respectively, the Q and $\bar{Q}$ output of one and the same D flip-flop, it is impossible for both switches to be turned on simultaneously, which would lead to shortcircuiting of the input DC voltage source. D flip-flop 30, which operates the leg consisting of S1 and S2, changes its state at fixed points of time which are determined by oscillator 25. D flip-flop 31 takes over the state of D flip-flop 30 after a delay time determined by the control detector 26 or peak current detector 27. Control detector 26 compares the saw-tooth voltage on capacitor 22, waveform B in Fig. 2, with a reference voltage and triggers D flip-flop 31 through gate 29 as soon as the voltage on capacitor 22 exceeds the reference voltage. Waveform C in Fig. 2 represents the output voltage of gate 29. Gate 29 can be an OR gate, as indicated in Fig. 1, or a NAND gate, which then requires that the input signals be inverted, as indicated in Fig. 3a. Just before the start of each F4 phase, capacitor 22 is discharged by reset circuit 24 in a comparatively very short time, whereafter the capacitor is charged again by the voltage-controlled power source 21. The time lag between the discharge of the capacitor and the attainment of the reference voltage and hence the duration of the active phase is inversely proportional to the current supplied by power source 21. Clip circuit 23 ensures that power source 21 does not jam and that the discharge time of capacitor 22 becomes substantially independent of the duration of the active phase. The power source is controlled by the sum or the difference of a voltage which is proportional to the rectified primary transformer current and the control voltage. With this control voltage, therefore, the output current can be regulated. As a result, the coil 13 does not feature in the transfer of control voltage to output voltage and the closed control loop can therefore be very fast without becoming unstable. Measuring the primary transformer current instead of the secondary coil current has as an advantage that any DC current component in the transformer current, due to the above-mentioned unbalance, is minimized by the control. The fact is that if in a given active phase the primary current becomes greater, at equal control voltage, then the duration of the relevant active phase is shortened immediately. If control detector 26 does not supply a clock signal to D flip-flop 31 and the peak current limitation is not responsive yet, for instance in the case of a sudden load increase of the supply, then at the end of the period, just before D flip-flop 30 receives a clock signal, a clock signal is supplied to D flip-flop 31 by a signal derived from the oscillator, so that it takes over the state of D flip-flop 30. The bridge is then controlled with a phase difference of almost 180°. The clock oscillator to that end generates a square wave with a duty cycle of almost 100%, see waveform A in Fig. 2. This clock signal is supplied to the clock input of D flip-flop 30 and via inverter 28 to the clock input of D flip-flop 31.

Since the D flip-flops respond to an ascending flank at the clock input, D flip-flop 31 will be toggled on the descending flank of the clock signal and D flip-flop 30 will be toggled on the ascending flank. Thus, the occurrence of undefined states of the D flip-flops is prevented at all times. During the time when the clock signal is low, capacitor 22 is discharged by reset circuit 24. Because the control signals coming from the D flip-flops have a duty cycle of exactly 50% and the control signals on the outputs of the D flip-flops are available in phase and in antiphase, the driver stages can be of very simple design, see Fig. 3. The four outputs of the two D flip-flops 30 and 31 are each connected with the gate of a small-signal MOSFET, 42-45. The sources of these MOSFETs are connected with terminal 1 of the auxiliary voltage supply and the drains are connected with the primary winding of the two driver transformers 46 and 47, of which the central leg is connected with terminal 3 of the auxiliary voltage supply via undervoltage protection 37.

The secondary windings of these driver transformers are connected in such a manner that the power switches of a bridge leg are turned on in turn. When MOSFETs are used for the power switches, then a simple, adaptive turn-on delay to enable minimal loss turn-on can be obtained with a single series resistor. To that end, one connection of each of the secondary windings of driver transformers 46 and 47 is connected with the source of the MOSFETs and the other connection of each of the secondary windings is connected with the gate of the MOSFET by way of a parallel circuit of a resistor (48-51) and a diode (52-55). The fact is, as long as the drain source voltage of the MOSFET is still decreasing, a current flows through the parasitic drain gate capacitance, and therefore also through the series resistor referred to. The resultant voltage drop across this resistor keeps the MOSFET in the off-state until the voltage change per unit time across the MOSFET has fallen below a specified value.

Turn-off of the MOSFET can be effected through diodes 52-55 parallel to the series resistors 48-51, see Fig. 3a, or, as shown in Figs. 3b and 3c, respectively, by way of an additional MOSFET 56 or a bipolar transistor 59.

The series resistors 57 and 60, respectively, again provide for the turn-on delay, whilst at the instant of turn-off, respectively, MOSFET 56 is turned on by resistor 57 and transistor 59 is turned on by resistor 60, so that the gate source voltage of the MOSFETS in the bridge can be quickly driven to zero.

Through the presence of diode 58 and diode 61, respectively, MOSFET 56 and transistor 59, respectively, can be turned on, without requiring that first the gate source capacitance of the connected MOSFET be discharged via series resistor 57 and 60, respectively. Schottky diode 62 prevents excessive saturation of transistor 59.

The capacitors 38, 39, 40 and 41 connected in parallel with the controllable semiconductor switches in Fig. 1 are the parasitic capacitances of the controllable semiconductor switches, with optional additional capacitors connected in parallel therewith to reduce the turn-off losses and the interference level.

The diodes 4, 5, 6 and 7 connected in parallel with the controllable semiconductors in Fig. 1 are parasitically present in the controllable semiconductor switches if MOSFETs are used for the controllable semiconductor switches. These diodes limit the peak voltage across each of the controllable semiconductor switches to the level of the input DC voltage between the terminals 2 and 1.

Peak current detector 27 protects *inter alia* the controllable semiconductor switches S1-S4 and diodes 8-11 against too high currents at start-up, overload and shorting, and prevents saturation of the secondary coil 13.

The current measurement can take place at different positions in the bridge: in series with the primary winding of transformer 12 by current measuring circuit 16 or by two current measuring circuits 19 and 20, each in series with one of the switches in a bridge leg, or in series with the connection of input terminals 1 or 2 to the bridge, by current measuring circuit 17 or 18. The current measuring circuits 16, 17, 19 and 20 must have a galvanic isolation between input and output. This is not the case for current measuring circuit 18 and so this can be, for instance, a current measuring resistor. For each of the four ways of measuring current it is desirable that the DC component be measured as well. Undervoltage protection 37 turns on the driver stages only if the auxiliary voltage on terminal 3 is sufficiently high to reliably switch the controllable semiconductor switches S1-S4. A comparator circuit 34 compares the desired value of the output quantity with the actual value and provides to adder circuit 36, by way of galvanic isolation 35, a feedback signal which is proportional to the difference between actual value and desired value. The output voltage of adder circuit 36 drives power source 21, which charges capacitor 22. The charging current for capacitor 22 is now proportional to the sum of the feedback signal and the primary current. Now, when the actual output quantity becomes smaller than the desired value, then the feedback signal becomes smaller. Via the voltage-controlled power source 21 the charging current for capacitor 22 is then reduced, so that the phase difference between the two bridge leg voltages increases and the primary current increases, and the other way round.

In Fig. 3 the feedback signal is first inverted by the transistor present in the galvanic isolation and then subtracted from the current measured signal, waveform G. This gives the same result as noninversion and addition to the current measured signal.

In Fig. 2a such a load is present that the current in the secondary coil 13 does not become discontinuous yet and that the coil current transformed to the primary side is small relative to the magnetizing current of transformer 12. The current indicated in Fig. 2a as I(D-E) accordingly consists substantially exclusively of magnetizing current. Through an appropriate choice of the magnetizing current, zero-voltage switching can still be realized at minimum load and even at no-load, at the cost of slightly greater conduction losses in the controllable semiconductor switches and in the primary winding of transformer 12.

In Figs. 2b and 2c the coil current transformed to the primary side is large relative to the magnetizing current, to such an extent that the sum of these two currents, I(D-E), in Fig. 2b just fails to activate the peak current detector 27 and in Fig. 2c does activate the peak current detector 27, which in its turn toggles D flip-flop via gate 29, so that the active phase is ended.

The waveform drawn in Fig. 2 relates to current measurement in series with the primary winding of transformer 12 by current measuring circuit 16. In the above-described manner of phase modulation there is a hyperbolic relation between the output voltage of adder circuit 36 and the resultant phase difference. For applications where this is undesirable, an arithmetic operation can be performed on the output signal of adder circuit 25, whereby this relation can be linearized.

For applications where the minimum output current is small relative to the maximum, it may be desirable to use for output coil 13 a so-called non-linear coil whose self-induction decreases according as the output current increases. This prevents the current in the output coil 13 from becoming discontinuous. The effect of this on the loop amplification of the fed-back converter can be compensated, for instance, by making the transfer function of the voltage-controlled power source 21 dependent on the output current or on the primary transformer current. For the function of adder circuit and voltage-controlled power source an integrated transconductance amplifier can be used with advantage. It provides an output current which is proportional to the product of the input differential voltage and the control current, with which the transfer function, or transconductance, of the voltage-controlled power source can be set. With this control current the above-mentioned correction of the loop amplification can be implemented.

**Claims**

1. A DC converter comprising a transformer having primary and secondary windings; two pairs of controllable semiconductor switching elements connected in a bridge configuration, each pair comprising two series-connected controllable semiconductor switching elements, said pairs being connected in parallel to an input DC voltage source, the primary winding being connected between the nodal points of the series-connected controllable semiconductor switching elements, and the secondary winding, being coupled inductively with the primary winding, in operation delivering a controllable voltage to a load; a control circuit driving the controllable semiconductor switching elements in such a manner that the two controllable semiconductor switching elements of the first pair are turned on in alternation and in non-overlapping manner and that the second pair of controllable semiconductor switching elements are turned on and off in corresponding manner but at points of time which are time-delayed relative to the switching instants of the first pair by a controllable delay time which is between zero and half the periodic duration of the control frequency and with which the voltage across the load can be regulated, the control circuit generating a feedback signal which is proportional to the difference between a desired and an actual value of the controllable voltage, **characterized in that** the control circuit determines the delay time on the basis of the time-integrated difference between the feedback signal and a signal which is proportional to the current in the primary winding.

2. A DC converter according to claim 1, characterized in that the control circuit determines the delay time on the basis of the point of time at which said integrated difference exceeds a predetermined value.

3. A DC converter according to claim 1 or 2, characterized in that the delay time is determined by the time needed for charging a capacitor to a predetermined value with a current dependent on the current through the primary coil or a signal derived therefrom and on the feedback signal; and, as soon as the voltage across the capacitor exceeds the predetermined value, a second D flip-flop, which drives said second pair of controllable semiconductor switching elements via driver stages, is triggered and thereby takes over the state of a first D flip-flop, while said first D flip-flop, being connected as a divider and provided with clock signals with a fixed frequency, drives said first pair of controllable semiconductor switching elements through driver stages.

4. A converter according to any one of the preceding claims, characterized in that zero-voltage turn-on of the semiconductor switching elements is effected by energy exchange between capacitors connected in parallel with the controllable semiconductor switching elements and a coil being in series with the primary winding and by delaying the instant of turn-on of each of the controllable semiconductor switching elements to the proper extent relative to the instant of turn-off of the other controllable semiconductor switching element in the same pair.

5. A converter according to any one of the preceding claims, characterized in that a diode is connected in antiparallel with at least one of the semiconductor switching elements.

6. A converter according to claim 5, characterized in that the antiparallel-connected diodes are parasitically present in said controllable semiconductor switching elements.

7. A converter according to any one of claims 4-6, characterized in that said capacitors connected in parallel with the controllable semiconductor switching elements are parasitically present in said controllable semiconductor switching elements.

8. A converter according to any one of claims 4-7, characterized in that said coil being in series with the primary winding is parasitically present in the transformer, as a leakage self-induction between the primary and secondary windings.

9. A converter according to claim 8, characterized in that said leakage self-induction has been deliberately enlarged to achieve zero-voltage turn-on over a greater load range, as well as a lower interference level due to the reduced coupling capacitance between the primary and secondary windings.

10. A converter according to any one of the preceding claims, characterized in that the control circuit for the pairs of controllable semiconductor switching elements comprises a driver stage for each pair, the driver stages each consist of two MOSFETs and a driver transformer, the gates of the MOSFETs are connected with the output and the inverted output of flip-flops, the sources are connected with the first terminal of an auxiliary voltage source and the drains are connected with the primary winding of the driver transformer having a central leg connected with the second terminal of the auxiliary voltage source by way of an undervoltage protection, while the secondary windings of the driver transformer are connected with the controllable semiconductor switching elements in such a manner that these are turned on in alternation and in the proper phase.

11. A converter according to claim 10, characterized in that the controllable semiconductor switching elements comprise MOSFETs and the turn-on delay for enabling zero-voltage turn-on is effected by the voltage drop across a series resistor connected between the secondary windings of the driver transformer and the gate of the MOSFET, said voltage drop being the result of the current through the parasitic drain gate capacitance of the MOSFET during the time when the voltage across the MOSFET decreases, there being provided a diode connected in parallel with said resistor or a bipolar transistor or MOSFET connected between the gate and source of said MOSFET, the control input thereof being connected, whether or not through series or parallel elements, with the secondary windings of the driver transformers for fast turn-off of the MOSFET.

12. A converter according to any one of the preceding claims 3-11, characterized in that for comparing the voltage on said capacitor, standard logic gates are provided with schmitt trigger inputs, the reference voltage being formed by the threshold voltages of the relevant inputs.

13. A converter according to any one of the preceding claims, characterized by at least one operational transconductance amplifier which combines the functions of sum or difference amplifier and voltage-controlled power source.

14. A converter according to claim 13, characterized in that the amplification of the operational transconductance amplifier is controllable.

15. A converter according to any one of the preceding claims, characterized in that the charging current for the capacitor is provided by a voltage-controlled power source.

16. A converter according to claim 15, characterized in that the voltage on the capacitor is limited by a voltage limiter connected with the capacitor and set at a level which is above the threshold voltage of a comparator connected with the capacitor but is so low as to prevent saturation of the voltage-controlled power source and a too long discharge time of said capacitor.

FIG.1

EP 0 625 820 A2

FIG.2a

FIG.2b

FIG.2c

EP 0 625 820 A2

FIG. 3a

FIG.3b

FIG.3c

EP 0 625 820 A2